# EUROPÄISCHE PATENTANMELDUNG

(11) **EP 4 250 246 A1**
(43) Veröffentlichungstag der Anmeldung: **27.09.2023**
(21) Anmeldenummer: 23157049.0
(22) Anmeldetag: 16.02.2023
(51) Int. Cl.: G06V 10/80, G06V 20/59, G06V 10/25

(54) **COMPUTERIMPLEMENTIERTES VERFAHREN ZUM ERKENNEN EINES OBJEKTES IN EINEM INNENRAUM EINES ÖFFENTLICHEN VERKEHRSMITTELS**

(30) Priorität: 22.03.2022 DE 102022202794
(71) Anmelder: Siemens Mobility GmbH, 81739 München (DE)
(72) Erfinder: Sema, Albi, 10629 Berlin (DE)
(74) Vertreter: Siemens Patent Attorneys

(57) **Zusammenfassung**

Verfahren zum Erkennen eines Objektes in einem Innenraum eines öffentlichen Verkehrsmittels, das nicht Teil der Einrichtung des Innenraums ist, wobei von einer Kamera ein Bild des Innenraumes aufgenommen wird, wobei das aufgenommene Bild mit einem Referenzbild des Innenraumes verglichen wird, wobei das Referenzbild den Innenraum des öffentlichen Verkehrsmittels ohne ein Objekt darstellt, das nicht Teil der Einrichtung des Innenraums ist,
wobei bei dem Vergleich Pixel des aufgenommenen Bildes und Pixel des Referenzbildes verglichen werden, wobei bei dem Vergleich der Pixel des aufgenommenen Bildes und des Referenzbildes ein Helligkeitsunterschied und/oder ein Farbunterschied zwischen den Pixeln ermittelt wird, wobei ein Pixel des aufgenommenen Bildes als abweichendes Pixel erkannt wird, wenn der Helligkeitsunterschied und/oder der Farbunterschied gegenüber dem Pixel des Referenzbildes einen vorgegebenen Schwellwert überschreitet, wobei um das wenigstens eine abweichende Pixel ein vorgegebener Prüfbereich im aufgenommenen Bild festgelegt wird, wobei der Prüfbereich dahingehend überprüft wird, ob sich ein Objekt in dem Prüfbereich befindet, das nicht Teil der Einrichtung des Innenraums ist, und wobei ein Signal ausgegeben wird, wenn sich ein Objekt, das nicht Teil der Einrichtung des Innenraums ist, im Prüfbereich des aufgenommenen Bildes befindet.

## Beschreibung

Die Erfindung betrifft ein computerimplementiertes Verfahren zum Erkennen eines Objektes in einem Innenraum eines öffentlichen Verkehrsmittels, einen Computer, der das Verfahren ausführt, ein Computerprogramm und ein maschinenlesbares Speichermedium.

Im Stand der Technik ist bekannt, vor dem Abstellen eines öffentlichen Verkehrsmittels, beispielsweise eines Zuges auf einem Abstellgleis, das öffentliche Verkehrsmittel dahingehend zu überprüfen, ob sich eine Person noch im öffentlichen Verkehrsmittel befindet. Dies wird durch eine Bedienperson ausgeführt.

Die Aufgabe der Erfindung besteht darin, ein automatisiertes Verfahren vorzuschlagen, um einen Innenraum eines öffentlichen Verkehrsmittels dahingehend zu überprüfen, ob sich ein Objekt, das nicht Teil der Einrichtung des Innenraumes des öffentlichen Verkehrsmittels ist, noch im Innenraum des öffentlichen Verkehrsmittels befindet.

Die Aufgabe der Erfindung wird durch die unabhängigen Patentansprüche gelöst. Weitere Ausbildungen des vorgeschlagenen Verfahrens sind in den abhängigen Ansprüchen angegeben.

Es wird ein computerimplementiertes Verfahren zum Erkennen eines Objektes in einem Innenraum eines öffentlichen Verkehrsmittels, das nicht Teil der Einrichtung des Innenraumes ist, vorgeschlagen. Dabei wird von einer Kamera ein Bild des Innenraumes aufgenommen. Das aufgenommene Bild wird mit einem Referenzbild des Innenraumes verglichen. Das Referenzbild zeigt den Innenraum des öffentlichen Verkehrsmittels ohne ein Objekt, das nicht Teil der Einrichtung des Innenraums ist. Bei dem Vergleich werden Pixel des aufgenommenen Bildes und Pixel des Referenzbildes miteinander verglichen. Dabei werden jeweils die gleichen Pixel, d.h. die Pixel mit der gleichen Ortskoordinate in dem aufgenommenen Bild bzw. in dem Referenzbild miteinander verglichen. Bei dem Vergleich der Pixel des aufgenommenen Bildes und des Referenzbildes wird ein Helligkeitsunterscheid und/oder ein Farbunterschied zwischen den gleichen Pixeln des aufgenommenen Bildes und des Referenzbildes ermittelt. Dabei wird ein Pixel des aufgenommenen Bildes als ein abweichendes Pixel erkannt, wenn der Helligkeitsunterschied und/oder der Farbunterschied gegenüber dem Pixel des Referenzbildes einen entsprechenden vorgegebenen Schwellwert überschreitet. Anschließend wird um das wenigstens eine abweichende Pixel ein vorgegebener Prüfbereich im aufgenommenen Bild festgelegt. Anschließend wird nur der Prüfbereich dahingehend überprüft, ob sich ein Objekt in dem Prüfbereich befindet, das nicht Teil der Einrichtung des Innenraumes ist. Wird ein Objekt, das nicht Teil der Einrichtung des Innenraumes ist, im Prüfbereich des aufgenommenen Bildes erkannt, so wird ein Signal ausgegeben.

Der Prüfbereich weist eine vorgegebene Fläche auf, wobei sich das abweichende Pixel und/oder die abweichenden Pixel z.B. in einem Mittelbereich des vorgegebenen Prüfbereiches befinden. Beispielsweise kann der Prüfbereich kreisförmig oder rechteckförmig ausgebildet sein. Werden mehrere abweichende Pixel ermittelt, die insbesondere eine zusammenhängende Fläche oder eine wenigstens teilweise zusammenhängende Fläche bilden, so wird der Prüfbereich in der Weise in Bezug auf den Bereich ausgerichtet, dass sich die wenigstens teilweise zusammenhängende Fläche der abweichenden Pixel in einem Mittenbereich des Prüfbereiches befindet. Durch die Festlegung und die Verwendung des Prüfbereiches ist es nicht erforderlich, das gesamte aufgenommene Bild in Bezug auf das Vorhandensein eines Objektes zu überprüfen. Somit wird Bearbeitungszeit und Speicherbedarf eingespart. Auf diese Weise können Bereiche des aufgenommenen Bildes von der weiteren Überprüfung ausgenommen werden, in denen sich keine abweichenden Pixel oder keine vorgegebene Anzahl von abweichenden Pixeln und/oder kein vorgegebenes Muster von abweichenden Pixeln befindet. Beispielsweise ist ein Objekt, das nicht Teil der Einrichtung des Innenraumes ist, eine Person, ein Tier oder auch ein Gegenstand wie beispielsweise ein Fahrrad oder eine Tasche.

In einer weiteren Ausführungsform wird mithilfe eines trainierten Klassifikators der Prüfbereich dahingehend überprüft, ob sich ein Objekt, das nicht Teil der Einrichtung des Innenraumes ist, in dem Prüfbereich befindet.

Durch die Verwendung des trainierten Klassifikators kann schnell und präzise das Vorhandensein eines Objektes überprüft werden.

In einer weiteren Ausführungsform wird das Referenzbild von einem trainierten neuronalen Netz bereitgestellt. Das trainierte neuronale Netz ist insbesondere als Autoencoder ausgebildet, der darauf trainiert ist, von einem aufgenommenen Bild ein rekonstruiertes Bild zu erstellen, wobei das rekonstruierte Bild das Referenzbild darstellt. Das neuronale Netz wurde mit Trainingsbilder, beispielsweise mithilfe eines selbstlernenden Trainingsverfahrens, trainiert. Als Trainingsbilder werden z.B. Bilder von Innenräumen ohne ein Objekt, das nicht Teil der Einrichtung des Innenraumes des öffentlichen Verkehrsmittels ist, verwendet. Somit stellt das rekonstruierte Bild und damit das Referenzbild ein Bild für den Innenraum ohne ein Objekt dar.

Mithilfe eines trainierten neuronalen Netzes kann ein Referenzbild bereitgestellt werden, das sich gut für das Überprüfen von abweichenden Pixeln eignet.

In einer weiteren Ausführungsform wird der Prüfbereich mit einer vorgegebenen Vergleichsfläche verglichen. Der Prüfbereich wird nur dann auf das Vorhandensein eines Objektes überprüft, wenn der Prüfbereich größer als die Vergleichsfläche ist. Beispielsweise ist die Vergleichsfläche die Mindestfläche, die ein Objekt, insbesondere ein Mensch, in einem von der Kamera aufgenommenen Bild einnimmt. Unterschreitet der Prüfbereich die Vergleichsfläche, so bedeutet dies, dass sich im Prüfbereich kein Objekt, insbesondere kein Mensch, befinden kann. Abhängig von der gewählten Ausführungsform können verschiedene Vergleichsflächen verwendet werden. Beispielsweise kann die Vergleichsfläche eine minimale Fläche eines Menschen, eines Tieres oder einer Tasche gemäß der Optik der Kamera und der Aufnahmeverhältnisse wie z.B. Abstand der Kamera und Aufnahmewinkel der Kamera zu dem Objekt darstellen. Somit kann mithilfe dieses Vergleichs das Vorhandensein eines Objektes von vornherein ausgeschlossen werden. Auf diese Weise wird Rechenzeit und Speicherkapazität eingespart.

Der Prüfbereich wird beispielsweise in der Weise festgelegt, dass für jedes abweichende Pixel ein Prüfbereich von beispielsweise 5x5 Pixel festgelegt wird. Dabei ist das abweichende Pixel in der Mitte des Prüfbereiches angeordnet. Der gesamte Prüfbereich ergibt sich aus den vorgegebenen Prüfbereichen aller abweichenden Pixel. Dabei werden die Prüfbereiche zu einem Gesamtprüfbereich addiert, wenn sich die Prüfbereiche überlappen oder aneinander angrenzen.

In einer weiteren Ausführungsform wird das aufgenommene Bild vor der weiteren Verarbeitung vorbearbeitet. Dabei wird das Bild z.B. in Grauwerte umgewandelt und/oder es werden Helligkeitsunterschiede und/oder Farbunterschiede zwischen benachbarten Pixeln des aufgenommenen Bildes mithilfe eines Filterverfahrens geglättet. Versuche haben gezeigt, dass durch die Vorbearbeitung des Bildes eine Verbesserung des Verfahrens erreicht wird.

In einer weiteren Ausführungsform ist der Klassifikator als Support-Vektor-Maschine oder als trainiertes neuronales Netz ausgebildet. Damit werden bekannte Verfahren verwendet, um den Klassifikator zu realisieren.

In einer weiteren Ausführungsform sind wenigstens zwei Kameras vorgesehen, die jeweils ein Bild von einem Innenraum des öffentlichen Verkehrsmittels aufnehmen. Die aufgenommenen Bilder der zwei Kameras überlappen sich in einem überlappenden Bildbereich. Der überlappende Bildbereich der zwei aufgenommenen Bilder der zwei Kameras wird dazu verwendet, um erst dann ein Objekt in dem überlappenden Bildbereich zu erkennen, wenn für jedes Bild der zwei Kameras getrennt voneinander mithilfe des beschriebenen Verfahrens ein Objekt, das nicht Teil der Einrichtung des Innenraumes ist, in dem überlappenden Bildbereich erkannt wurde. Dadurch wird die Zuverlässigkeit für die Erkennung eines Objektes erhöht.

In einer Ausführungsform werden die Bilder der zwei Kameras mit verschiedenen Verfahren dahingehend überprüft, ob sich ein Objekt, das nicht Teil der Einrichtung des Innenraumes ist, auf dem Bild befindet. Die verschiedenen Verfahren können sich beispielsweise in der Größe des Prüfbereiches, in der Art des verwendeten Klassifikators, in der Art des verwendeten Referenzbildes usw. unterscheiden. Durch die zwei verschiedenen Verfahren wird eine weitere Erhöhung der richtigen Erkennung eines Objektes erreicht.

In einer weiteren Ausführungsform weist das Signal, das bei der Erkennung eines Objektes im aufgenommenen Bild ausgegeben wird, eine Kennung für die Kamera, insbesondere eine ID-Nummer der Kamera auf. Mithilfe der Kennung wird die Kamera und insbesondere ein bestimmter Bereich des öffentlichen Verkehrsmittels identifiziert. Auf diese Weise ist es möglich, aufgrund des Signals präzise den Ort anzugeben bzw. aufzufinden, an dem sich das Objekt im öffentlichen Verkehrsmittel befindet. Dazu ist eine Datei vorgesehen, in der eine Zuordnung zwischen der Kennung der Kamera und dem Ort des öffentlichen Verkehrsmittels abgelegt ist. Wird beispielsweise das Vorhandensein des detektierten Objektes mithilfe einer Bedienperson überprüft, so erhält die Bedienperson aufgrund der Kennung der Kamera den Ort, an dem sich die Kamera befindet. Somit kann Arbeitszeit eingespart werden. Zudem kann durch die Angabe der Kennung der Kamera mit einem nachfolgenden Verfahren, beispielsweise von einer Bedienperson mithilfe der Kamera noch einmal das Vorhandensein eines Objektes überprüft werden. Dies ist insbesondere dann von Vorteil, wenn eine Vielzahl von Kameras zur Überprüfung des Innenraumes oder der Innenräume des öffentlichen Verkehrsmittels verwendet werden.

In einer weiteren Ausführungsform wurde das neuronale Netz mit Bildern von Räumen des öffentlichen Verkehrsmittels trainiert, die keine Objekte beinhalteten, die nicht Teil der Einrichtung des Innenraumes sind. Mithilfe dieser trainierten neuronalen Netze kann ein geeignetes Referenzbild für den Vergleich ermittelt werden. Dadurch wird die Wahrscheinlichkeit erhöht, abweichende Pixel, die von einem Objekt, das nicht Teil der Einrichtung ist, erzeugt werden, zu erkennen. Abweichende Pixel, die z.B. von unterschiedlichen Lichtverhältnissen, wie z.B. Dunkelheit oder heller Sonnenschein, erzeugt werden, werden mit größerer Wahrscheinlichkeit unterdrückt. Somit kommt es zu weniger fehlerhaft erkannten Objekten.

In einer weiteren Ausführungsform wird anhand einer vorgegebenen Anzahl von abweichenden Pixeln und/oder anhand von Positionen der abweichenden Pixel innerhalb des aufgenommenen Bildes ein Objekt erkannt, das nicht Teil der Einrichtung des Innenraumes des öffentlichen Verkehrsmittels ist. Auf diese Weise kann mit einfachen Verfahren das Vorhandensein eines Objektes sicherer überprüft und erkannt werden. Versuche haben gezeigt, dass einzelne abweichende Pixel immer wieder auftauchen. Somit können diese statistischen Fehler mithilfe einer vorgegebenen Anzahl von Pixeln als Schwelle aussortiert werden.

In einer weiteren Ausführungsform wird das ausgegebene Signal dazu verwendet, um eine Ausgabe zu starten. Die Ausgabe kann z.B. eine Ausgabe einer Anweisung insbesondere im Innenraum des öffentlichen Verkehrsmittels und/oder an eine Bedienperson sein, die darauf hinweist, dass und vorzugsweise, wo sich im öffentlichen Verkehrsmittel das Objekt befindet. Beispielsweise kann die Ausgabe in Form einer akustischen Ausgabe über einen Lautsprecher im Bereich des erkannten Objektes erfolgen. Damit kann eine Person, die sich im Innenraum des öffentlichen Verkehrsmittels befindet, angewiesen werden, den Innenraum zu verlassen. Weiterhin kann die Ausgabe in Form einer Textnachricht oder einer optischen Anzeige auf einem Display eines mobilen Gerätes einer Bedienperson, insbesondere eines Mobiltelefons erfolgen. Damit kann die Bedienperson die Information erhalten, dass sich ein Objekt, insbesondere eine Person im Innenraum des öffentlichen Verkehrsmittels befindet. Zudem kann mithilfe der Kennung der Kamera auch eine präzise Ortsangabe über den Aufenthaltsort des Objektes an die Bedienperson ausgegeben werden. Somit kann die Bedienperson gezielt beispielsweise einen bestimmten Wagen eines öffentlichen Verkehrsmittels aufsuchen, um das Objekt, insbesondere die Person, aus dem öffentlichen Verkehrsmittel zu entfernen.

Es wird ein Computer vorgeschlagen, der ausgebildet ist, eines der beschriebenen Verfahren auszuführen. Weiterhin wird ein Computerprogramm vorgeschlagen, das Befehle aufweist, die bei einer Ausführung auf einem Computer in der Lage sind, das beschriebene Verfahren auszuführen. Zudem wird ein maschinenlesbares Speichermedium vorgeschlagen, auf dem das Computerprogramm gespeichert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: eine schematische Darstellung eines Wagens eines öffentlichen Verkehrsmittels, insbesondere eines Zuges,
- FIG 2: einen schematischen Verfahrensablauf zur Durchführung des computerimplementierten Verfahrens,
- FIG 3: eine schematische Darstellung eines aufgenommenen Bildes mit Objekten,
- FIG 4: eine schematische Darstellung eines Referenzbildes,
- FIG 5: eine schematische Darstellung eines Differenzbildes,
- FIG 6: eine schematische Darstellung des aufgenommenen Bildes mit Prüfbereichen,
- FIG 7: ein aufgenommenes Bild einer ersten Kamera, und
- FIG 8: ein aufgenommenes Bild einer zweiten Kamera darstellt.

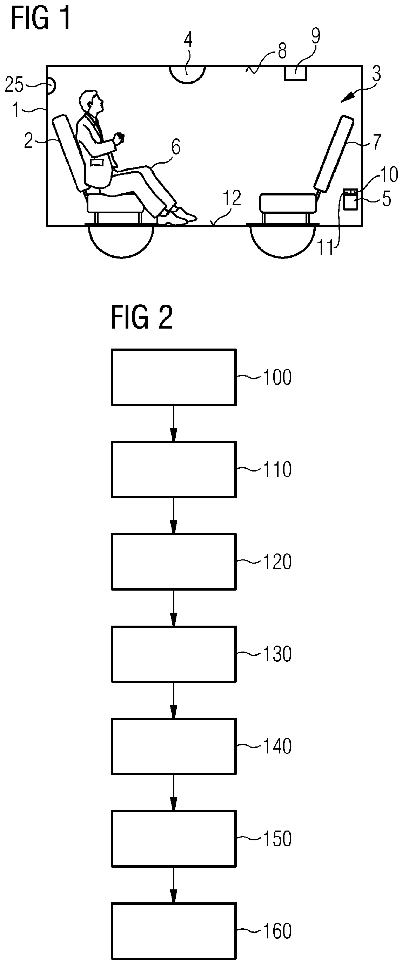

FIG 1 zeigt in einer schematischen Darstellung einen Innenraum 3 eines öffentlichen Verkehrsmittels 1. Das öffentliche Verkehrsmittel kann beispielsweise ein Zug, ein Bus, eine U-Bahn oder eine Straßenbahn sein. Im Innenraum 3 sind als Einrichtung zwei Sitze 2, 7 dargestellt. Auf einem ersten Sitz 2 sitzt eine Person 6. Die Sitze 2, 7 sind auf einem Boden 12 eines Wagens des öffentlichen Verkehrsmittels 1 angeordnet. An einer Decke 8 des Innenraumes 3 ist eine Kamera 4 befestigt. Die Kamera 4 nimmt in dem dargestellten Ausführungsbeispiel von oben ein Bild des Innenraumes 3 auf. Die Kamera 4 kann aber auch an einer anderen Stelle, z.B. an einer Seitenwand, des öffentlichen Verkehrsmittels angeordnet sein. Die Kamera 4 ist z.B. als digitale Kamera, insbesondere als eine CCTV-Kamera ausgebildet. Die Kamera 4 steht mit einem Computer 5 in Verbindung, der in dem dargestellten Ausführungsbeispiel unter dem zweiten Sitz 7 angeordnet ist. Die Verbindung zwischen der Kamera 4 und dem Computer 5 kann drahtlos oder über eine elektrische Leitung, insbesondere über einen Datenbus ausgebildet sein. Der Computer 5 verfügt über einen Prozessor 10 und einen Programm- und Datenspeicher 11. Weiterhin ist an der Decke 8 eine Ausgabeeinheit 9, beispielsweise ein Lautsprecher, ein Bildschirm oder eine Datenschnittstelle wie z.B. WLAN-Schnittstelle, eine Mobilfunk-Schnittstelle oder eine Ethernet-Schnittstelle eines Datenbusses sein.

Der Computer 5 ist ausgebildet, um mithilfe der Kamera 4, dem Prozessor 10 und dem Programm- und Datenspeicher 11 ein computerimplementiertes Verfahren zum Erkennen eines Objektes in einem Innenraum des öffentlichen Verkehrsmittels, das nicht Teil der Einrichtung des Innenraumes ist, zu erkennen und nach dem Erkennen des Objektes ein Signal abzugeben. Zudem ist eine zweite Kamera 25 vorgesehen, die an einer Seitenwand des Wagens befestigt ist.

FIG 2 zeigt in einer schematischen Darstellung einen Programmablauf zur Durchführung dieses Verfahrens. Bei Programmpunkt 100 nimmt die Kamera 4 ein Bild des Innenraumes 3 von oben auf. Das aufgenommene Bild wird an den Prozessor 10 des Computers 5 bei Programmpunkt 110 übermittelt. Bei Programmpunkt 120 vergleicht der Prozessor 10 mithilfe eines entsprechenden Softwareprogramms das aufgenommene Bild mit einem im Datenspeicher 11 abgespeicherten Differenzbild. Das Differenzbild stellt den Innenraum des öffentlichen Verkehrsmittels ohne ein Objekt dar. Bei diesem Vergleich werden gleiche Pixel des aufgenommenen Bildes mit gleichen Pixeln des Referenzbildes verglichen. Das aufgenommene zweidimensionalen Bild erstreckt sich einer x-Richtung und in einer y-Richtung. Bei dem Vergleich der Pixel werden jeweils die Pixel des aufgenommenen Bildes und des Referenzbildes mit der gleichen x-Koordinate und y-Koordinate verglichen. Bei dem Vergleich der Pixel des aufgenommenen Bildes mit den Pixel des Referenzbildes wird überprüft, ob ein Helligkeitsunterschied und/oder ein Farbunterschied zwischen den Pixeln des aufgenommenen Bildes und des Referenzbildes besteht.

Bei einem folgenden Programmpunkt 130 wird überprüft, ob der ermittelte Helligkeitsunterschied und/oder Farbunterschied zwischen dem Pixel des aufgenommenen Bildes und dem an der gleichen Position des Bildes befindlichen Pixel des Referenzbildes ein Helligkeitsunterschied und/oder ein Farbunterschied vorliegt, der über einem entsprechenden Schwellwert liegt. Dabei wird für den Helligkeitsunterschied beispielsweise ein anderer Schwellwert verwendet wie für den Farbunterschied. Ergibt der Vergleich bei Programmpunkt 130, dass der überprüfte Pixel des aufgenommenen Bildes einen Helligkeitsunterschied und/oder einen Farbunterschied gegenüber dem entsprechenden Pixel des Referenzbildes aufweist, der über einem vorgegebenen Schwellwert liegt, so wird der Pixel als abweichender Pixel identifiziert.

Auf diese Weise werden bei Programmpunkt 130 vorzugsweise alle Pixel des aufgenommenen Bildes mit den entsprechenden Pixeln des Referenzbildes verglichen.

In einem folgenden Programmpunkte 140 wird um jeden abweichenden Pixel ein vorgegebener Prüfbereich im aufgenommenen Bild festgelegt. Der vorgegebenen Prüfbereich kann beispielsweise 9 Pixel umfassen, wobei der vorgegebene Prüfbereich so festgelegt wird, dass der abweichende Pixel im Zentrum des 3 x 3 quadratischen Prüfbereiches liegt. Abhängig von der gewählten Ausführungsform kann der vorgegebene Prüfbereich für jeden abweichenden Pixel auch kleiner oder größer sein.

In einem folgenden Programmpunkt 150 wird nur der gesamte Prüfbereich, der durch die Prüfbereiche der abwechselnden Pixel festgelegt wird, dahingehend überprüft, ob sich ein Objekt in dem gesamten Prüfbereich befindet. Wird ein Objekt, das nicht Teil der Einrichtung des Innenraumes ist, erkannt, so wird bei einem folgenden Programmpunkte 160 ein Signal vom Computer ausgegeben. Das Signal kann optisch, akustisch oder in Form eines elektromagnetischen Signales ausgebildet sein.

In einer Ausführungsform ist der Klassifikator, der bei Programmpunkt 150 eingesetzt wird, als Support-Vektor-Maschine oder als ein trainiertes neuronales Netz ausgebildet.

Abhängig von der gewählten Ausführungsform kann bei Programmpunkt 150 die Überprüfung des Prüfbereiches des aufgenommenen Bildes mithilfe eines trainierten Klassifikators dahingehend untersucht werden, ob sich ein Objekt, das nicht Teil der Einrichtung des Innenraumes ist, in dem Prüfbereich befindet. Durch die Festlegung der Prüfbereiche bzw. des gesamten Prüfbereiches ist es nicht erforderlich, dass das gesamte aufgenommenen Bild in Bezug auf das Vorhandensein eines Objektes überprüft wird. Da nur der Prüfbereich im Hinblick auf das Vorhandensein eines Objektes überprüft wird, wird Rechenzeit und Speicherbedarf eingespart.

Das bei Programmpunkt 120 verwendete Referenzbild wird beispielsweise von einem trainierten neuronalen Netz bereitgestellt. Das trainierte neuronale Netz ist beispielsweise als Autoencoder ausgebildet, der darauf trainiert ist, von einem aufgenommenen Bild ein rekonstruiertes Bild zu erstellen. Das rekonstruierte Bild des Innenraumes stellt das Referenzbild dar. Wobei beim Training des Autoencoders als Trainingsdaten Bilder von Innenräumen bzw. Bilder des Innenraumes verwendet wurden, die kein Objekt aufweisen, das nicht Teil der Einrichtung des Innenraumes ist. Auf diese Weise wird ein für den Vergleich gut geeignetes Referenzbild erhalten.

In einer weiteren Ausführungsform wird in einem optionalen Programmschritt nach Programmpunkt 140 und vor Programmpunkt 150 überprüft, ob der gesamte Prüfbereich aller abweichenden Pixel größer ist als eine vorgegebene Vergleichsfläche. Ist der gesamte Prüfbereich kleiner als die vorgegebene Vergleichsfläche, so wird der Prüfbereich nicht weiter untersucht und es wird davon ausgegangen, dass sich kein Objekt in dem Innenraum befindet. Abhängig von der gewählten Ausführungsform können verschiedene Vergleichsflächen im Datenspeicher 11 abgelegt sein. Beispielsweise ist die Vergleichsfläche eine Mindestfläche, die ein Objekt, z.B. ein Mensch, auf dem aufgenommenen Bild der Kamera einnimmt. Zudem können für verschiedene Arten von Objekten wie z.B. Menschen, Tiere oder Taschen verschiedene Vergleichsflächen vorgesehen sein. Die Vergleichsfläche hängt z.B. von der Optik der Kamera, dem Abstand der Kamera vom Objekt und/oder vom Blickwinkel der Kamera auf das Objekt ab. Somit kann abhängig von der Genauigkeit bzw. von der Art der Überprüfung der vorhandenen Objekte eine entsprechende Vergleichsfläche gewählt werden, die im Datenspeicher 11 abgelegt ist. Durch den optionalen Programmpunkt wird zudem Rechenzeit eingespart, da der Vergleich mit der Vergleichsfläche einfacher und schneller auszuführen ist als die Überprüfung des Prüfbereiches auf das Vorliegen eines Objektes.

In einer weiteren Ausführungsform wird bei Programmpunkt 110 beispielsweise vom Computer mit entsprechenden Programmen das aufgenommene Bild vor der weiteren Verarbeitung vorbearbeitet. Dabei wird das beispielsweise in Farbe aufgenommene Bild in Grauwerte umgewandelt. Zudem können Helligkeitsunterschiede und/oder Farbunterschiede zwischen benachbarten Pixeln des aufgenommenen Bildes mithilfe von Filterverfahren geglättet werden. Dabei kann beispielsweise eine Glättung mit einem Gaußfilter durchgeführt werden.

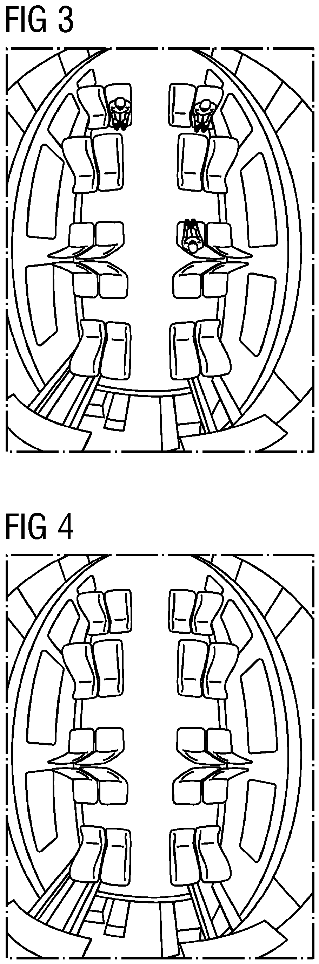

FIG 3 zeigt in einer schematischen Darstellung ein aufgenommenes Bild der Kamera 4. FIG 4 zeigt im Vergleich dazu ein Referenzbild, das den gleichen Innenraum wie in FIG 3, jedoch ohne Objekte, d.h. in diesem Fall ohne Menschen, die nicht Teil der Einrichtung sind, darstellt.

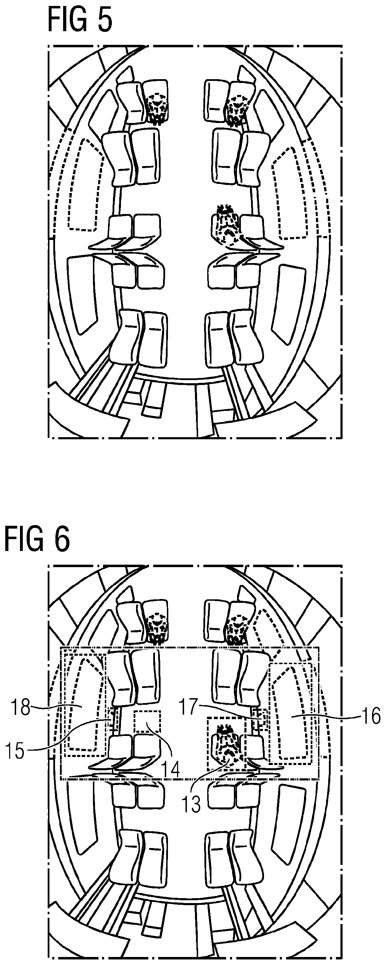

FIG 5 zeigt schematisch ein Differenzbild zwischen dem aufgenommenen Bild der FIG 3 und dem Referenzbild der FIG 4. Die Differenzbilder können mit verschiedenen bekannten Verfahren, wie z.B. einer einfachen Differenzbildung zwischen Helligkeiten und/oder den Farbunterschieden zwischen aufgenommenem Bild und dem Referenzbild ermittelt werden. Zudem können jedoch auch weitere Verfahren, wie z.B. die Verwendung eines trainierten neuronalen Netzes zum Ermitteln eines Differenzbildes zwischen dem aufgenommenen Bild und dem Referenzbild verwendet werden. Weiterhin können bekannte Verfahren zum Ermitteln eines Differenzbildes verwendet werden, wie beispielsweise in dem Artikel "Image Segmentation using deep learning: A survey", Sherwin Minae et al. arxv:2001.05566v5, 15. November 2020 beschrieben ist.

FIG 6 zeigt in einer schematischen Darstellung das aufgenommene Bild der FIG 3, wobei zudem Prüfbereiche 13 bis 18 eingezeichnet sind. Die Prüfbereiche 13 bis 18 wurden gemäß dem Programmpunkt 150 entsprechend den erkannten abweichenden Pixeln des Differenzbildes der FIG 5 festgelegt. Anhand von FIG 6 kann deutlich erkannt werden, dass durch das Festlegen der Prüfbereiche 13 bis 18 deutlich weniger Pixel des aufgenommenen Bildes auf das Vorhandensein eines Objektes überprüft werden müssen als ohne Prüfbereiche. Zudem können beispielsweise der zweite, der dritte und der fünfte Prüfbereich 14, 15, 17 schon bei der optionalen Überprüfung zwischen Programmpunkt 140 und 150 von der weiteren Bearbeitung ausgeschlossen werden, da diese Prüfbereiche kleiner als eine vorgegebene Vergleichsfläche sind, die beispielsweise ein Mensch in dem Bild einnehmen würde. Somit verbleiben für die Überprüfung, ob sich ein Objekt in dem Prüfbereich befindet, nur noch der erste Prüfbereich 13, der vierte Prüfbereich 16 und der sechste Prüfbereich 18.

Da der vierte und der sechste Prüfbereich 16, 18 keine Struktur aufweist, die auf einen Menschen hindeutet, wird auch für diese Prüfbereiche kein Objekt, insbesondere kein Mensch mit dem beschriebenen Verfahren erkannt.

Abhängig von der gewählten Ausführungsform können bei der Verwendung von mehreren Kameras Ausschnitte aus dem aufgenommenen Bild der Kameras ausgeschnitten werden und nur der entsprechende Ausschnitt 19, wie in FIG 6 dargestellt ist, vom Computer bei Programmpunkt 110 weiterverarbeitet werden. Die Verwendung von Ausschnitten 19 erfordert jedoch, dass mehrere Kameras vorgesehen sind, die miteinander den gesamten Innenraum des öffentlichen Verkehrsmittels aufnehmen. Dazu ist schematisch in FIG 1 die zweite Kamera 25 vorgesehen.

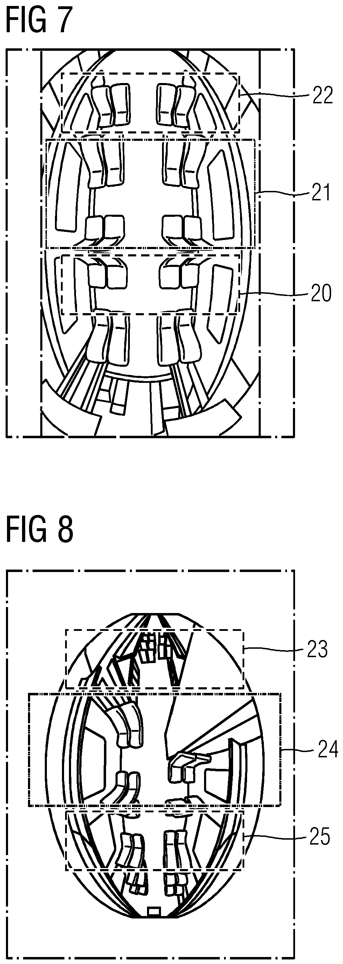

FIG 7 zeigt in einer schematischen Darstellung ein Bild einer ersten Kamera, das einen ersten, einen zweiten und einen dritten Ausschnitt 20, 21, 22 aufweist, wobei die Ausschnitte durch entsprechende Rechtecke markiert sind. Zudem ist in FIG 8 das Bild einer weiteren Kamera dargestellt, das einen vierten, einen fünften und einen sechsten Ausschnitt 23, 24, 25 unterteilt ist. Im dargestellten Ausführungsbeispiel stellen der ersten Ausschnitt 22 der ersten Kamera und der sechste Ausschnitt 25 überlappende Bildbereich dar. Eine Verbesserung der sicheren Erkennung eines Objektes, das nicht Teil der Einrichtung des Innenraumes ist, kann dadurch erreicht werden, dass überlappende Bildbereiche von zwei verschiedenen Kameras getrennt voneinander auf das Vorliegen eines Objektes überprüft werden. Ergibt die Überprüfung der Bilder der zwei Kameras getrennt voneinander, dass ein Objekt in dem überlappenden und identischen Bildbereich vorliegt, so wird das Vorliegen des Objektes in dem Bildbereich erkannt. Ergibt jedoch die Überprüfung der überlappenden Bildbereiche der zwei Kameras, dass nur in einem der überlappenden Bildbereiche der zwei Kameras ein Objekt erkannt wurde, so wird als Ergebnis kein Objekt erkannt. Auf diese Weise wird eine höhere Zuverlässigkeit für die sichere Erkennung eines Objektes erreicht.

Abhängig von der gewählten Ausführungsform können die von den zwei Kameras aufgenommenen Bilder, insbesondere Bildbereiche mit verschiedenen Verfahren in Bezug auf das Vorliegen eines Objektes überprüft werden. Auf diese Wiese wird das Vorliegen eines Fehlers in einem der Überprüfungsverfahren leichter erkannt. Zudem führt eine Fehlfunktion eines verwendeten Verfahrens nicht dazu, dass fälschlicherweise ein Objekt erkannt wird. Bei der Verwendung von zwei verschiedenen Verfahren bei der Überprüfung der überlappenden Bildebereiche zweier Kameras kann es auch vorteilhaft sein, wenn ein Objekt als Ergebnis erkannt wird, wenn nur für einen überlappenden Bildbereich der zwei Kameras ein Objekt erkannt wurde.

Insbesondere kann mit diesem Verfahren zur Überprüfung identischer überlappender Bildbereiche von zwei aufgenommenen Bildern von zwei verschiedenen Kameras mit verschiedenen Verfahren überprüft werden, ob ein Objekt in dem überlappenden Bildbereich vorhanden ist.

Das Signal, das bei Programmpunkt 160 ausgegeben wird, kann beispielsweise eine akustische Ansage sein, die über den Lautsprecher 9 an den Innenraum ausgegeben wird. Die Ansage kann beispielsweise darin bestehen, die erkannte Person aufzufordern, das öffentliche Verkehrsmittel zu verlassen. Zudem kann das Signal darin bestehen, eine Kennung der Kamera aufzuweisen, aufgrund deren Bild ein Objekt, das nicht Teil des Innenraumes des öffentlichen Verkehrsmittels ist, zu erkennen. Diese Information kann beispielsweise an ein Bediengerät einer Bedienperson übermittelt werden. Mit der Kennung der Kamera kann gleichzeitig die Position der Kamera im öffentlichen Verkehrsmittel übermittelt oder zugeordnet werden. Damit kann eine Bedienperson anhand der Kennung der Kamera eindeutig die Position des erkannten Objektes ermitteln. Somit kann die Bedienperson zielgerichtet an die entsprechende Position gehen, um das Objekt zu entfernen bzw. die Person aufzufordern, das öffentliche Verkehrsmittel zu verlassen. Dieses Verfahren ist insbesondere dann von Vorteil, wenn eine Vielzahl von Kameras zur Überwachung eines großen öffentlichen Verkehrsmittels eingesetzt werden.

In einer weiteren Ausführungsform wird bei Programmpunkt 150 anhand einer vorgegebenen Anzahl der abweichenden Pixel das Vorhandensein eines Objektes erkannt. Beispielsweise kann eine Vergleichsschwelle vorgesehen sein, die beispielsweise 100 abweichende Pixel pro Bild festlegt. Somit wird erst bei einer Anzahl von mehr als 100 abweichender Pixel überprüft, ob ein Objekt vorliegt. Somit wird auch durch diese Weise Rechenzeit und Speicherkapazität eingespart. Die Anzahl der abweichenden Pixel kann auch für zusammenhängende Bildbereiche vorgegeben sein. Somit werden nur die abweichenden Pixel zu einer Gesamtzahl addiert, die direkt aneinander angrenzen.

Zudem kann abhängig von der Position der abweichenden Pixel ein Objekt erkannt werden oder nicht. In dem Beispiel FIG 6 kann beispielsweise für Seitenbereiche, in denen sich der vierte und der sechste Prüfbereich 16, 18 befinden, die Information im Datenspeicher 11 hinterlegt sein, dass in diesem Bereich keine Objekte vorhanden sein können, da sich in diesem Bereich Fenster befinden.

Das Computerprogramm, mit dem dieses Verfahren abgearbeitet wird, ist im Programm- und Datenspeicher 11 abgelegt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Wie hierin verwendet, entspricht ein Computer, ein Prozessor oder ein Klassifikator z.B. einem Prozessor oder einem beliebigen elektronischen Gerät, das über Hardwareschaltungen, Software und/oder Firmware zur Verarbeitung von Daten konfiguriert ist. Beispielsweise können die hier beschriebenen Prozessoren einem oder mehreren (oder einer Kombination) eines Mikroprozessors, einer CPU oder einer anderen integrierten Schaltung (IC) oder einer anderen Art von Schaltung entsprechen, die in der Lage ist, Daten in einem Datenverarbeitungssystem zu verarbeiten. Es sollte verstanden werden, dass ein Prozessor, der so beschrieben oder beansprucht wird, dass er zur Ausführung eines bestimmten beschriebenen/beanspruchten Prozesses oder einer Funktion konfiguriert ist, einer CPU entsprechen kann, die Computer-/Prozessor-ausführbare Anweisungen ausführt, die in einem Speicher in Form von Software und/oder Firmware gespeichert sind, um einen solchen beschriebenen/beanspruchten Prozess oder eine solche Funktion auszuführen; und/oder einem IC entsprechen kann, der mit einer Verarbeitungsschaltung fest verdrahtet ist (z. B. ein FPGA oder ASIC IC), um einen solchen beschriebenen/beanspruchten Prozess oder eine solche Funktion auszuführen.

Es sollte auch verstanden werden, dass ein Computer, en Prozessor oder Klassifikator, der so beschrieben oder beansprucht wird, dass er so konfiguriert ist, dass er einen bestimmten beschriebenen/beanspruchten Prozess oder eine Funktion ausführt, der einer Kombination des Computers oder Klassifikators mit Softwareanweisungen entsprechen kann, die in den beschriebenen Speicher (flüchtig und/oder nichtflüchtig) geladen/installiert sind, die gerade ausgeführt werden und/oder zur Ausführung durch den Computer oder Klassifikator zur Verfügung stehen, um den Computer oder Klassifikator zu veranlassen, den beschriebenen/beanspruchten Prozess oder die Funktion auszuführen. So kann ein Prozessor, der ausgeschaltet ist oder andere Software ausführt, aber die beschriebenen Softwareanweisungen auf einem Speichergerät in operativer Verbindung damit (wie einer Festplatte oder SSD) in einer Weise installiert hat, die so eingerichtet ist, dass sie vom Computer oder Klassifikator ausgeführt wird (wenn er von einem Benutzer, einer Hardware und/oder anderer Software gestartet wird), auch dem beschriebenen/beanspruchten Computer oder Klassifikator entsprechen, der so konfiguriert ist, dass er die hierin beschriebenen/beanspruchten besonderen Prozesse und Funktionen ausführt.

Der Speicher des Computers oder Klassifikators kann einem internen oder externen flüchtigen Speicher (z.B. Hauptspeicher, CPU-Cache und/oder RAM) entsprechen, der in dem Computer enthalten ist und/oder in operativer Verbindung mit dem Computer bzw. Klassifikator steht. Ein solcher Speicher kann auch einem nichtflüchtigen Speicher entsprechen (z.B. Flash-Speicher, SSD, Festplatte oder ein anderes Speichergerät oder nichttransitorisches computerlesbares Medium), der in operativer Verbindung mit dem Computer steht. Der beschriebene Computer oder Klassifikator kann mindestens ein Eingabegerät und mindestens ein Anzeige- oder Ausgabegerät in operativer Verbindung mit dem Computer umfassen. Die Eingabevorrichtung kann beispielsweise eine Maus, eine Tastatur, einen Touchscreen, eine Gesteneingabevorrichtung oder eine andere Art von Eingabevorrichtung umfassen, die in der Lage ist, Benutzereingaben für den Computer oder den Klassifikator bereitzustellen. Die Anzeigevorrichtung kann beispielsweise einen LCD- oder AMOLED-Bildschirm, einen Monitor, ein am Kopf getragenes Display oder jede andere Art von Anzeigevorrichtung oder Ausgabevorrichtung umfassen, die in der Lage ist, Ausgaben des Computers oder Klassifikators anzuzeigen. Beispielsweise können der Computer oder Klassifikator, der Speicher, die Softwareanweisungen, die Eingabevorrichtung und die Anzeigevorrichtung als Teil eines Datenverarbeitungssystems enthalten sein, das einem PC, einer Workstation, einem Server, einem Notebook, einem Tablet, einem Mobiltelefon, einer kopfgetragenen Anzeige oder einer anderen Art von Computersystem oder einer beliebigen Kombination davon entspricht.

Der Computer oder Klassifikator kann auch einen oder mehrere Datenspeicher enthalten. Der Computer kann so konfiguriert sein, dass er Daten und/oder andere hierin beschriebene Informationen aus/in dem Datenspeicher verwaltet, abruft, erzeugt, verwendet, überarbeitet und speichert. Beispiele für einen Datenspeicher können eine Datei und/oder einen Datensatz umfassen, der in einer Datenbank (z. B. Oracle, Microsoft SQL-Server), einem Dateisystem, einer Festplatte, einer SSD, einem Flash-Laufwerk, einer Speicherkarte und/oder einer anderen Art von Gerät oder System gespeichert ist, das nichtflüchtige Daten speichert.

Es ist anzumerken, dass die Offenbarung zwar eine Beschreibung im Zusammenhang mit einem voll funktionsfähigen Computer oder Prozessor oder Klassifikator und/oder einer Reihe von Handlungen enthält, dass aber Fachleute verstehen werden, dass zumindest Teile des Mechanismus der vorliegenden Offenbarung und/oder der beschriebenen Handlungen in Form von ausführbaren Computer-/Prozessoranweisungen (z. B, die beschriebenen Software-Befehle und/oder die entsprechenden Firmware-Befehle), die in einem nicht-transitorischen maschinenverwendbaren, computerverwendbaren oder computerlesbaren Medium in einer beliebigen Form enthalten sind, verteilt werden können, und dass die vorliegende Offenbarung gleichermaßen gilt, unabhängig von der besonderen Art des Befehls- oder Datenträgermediums oder Speichermediums, das zur tatsächlichen Durchführung der Verteilung verwendet wird. Beispiele für nichttransitorische maschinenlesbare oder computerlesbare Medien sind: ROMs, EPROMs, Magnetbänder, Festplattenlaufwerke, SSDs, Flash-Speicher, CDs, DVDs und Blu-ray-Disks. Die vom Computer/Prozessor ausführbaren Anweisungen können eine Routine, eine Unterroutine, Programme, Anwendungen, Module, Bibliotheken und/oder Ähnliches umfassen. Ferner ist zu beachten, dass die ausführbaren Computer-/Prozessoranweisungen Quellcode, Bytecode, Laufzeitcode, Maschinencode, Assemblersprache, Java, JavaScript, Python, C, C#, C++ oder einer anderen Form von Code entsprechen und/oder daraus erzeugt werden können, der so programmiert/konfiguriert werden kann, dass er mindestens einen Prozessor veranlasst, die hierin beschriebenen Handlungen und Merkmale auszuführen. Weiterhin können die Ergebnisse der beschriebenen/geforderten Prozesse oder Funktionen in einem computerlesbaren Medium gespeichert, auf einer Anzeigevorrichtung angezeigt und/oder ähnlichem werden. Neuronale Netze und Modelle für maschinelles Lernen können in einem Rahmenwerk für maschinelles Lernen implementiert und eingesetzt werden, wie z. B. TensorFlow-Framework, Microsoft Cognitive Toolkit-Framework Rahmenwerk, Apache Singa Rahmenwerk oder Apache MXNet Rahmenwerk.

Es sollte auch gewürdigt werden, dass Geräte, die als Eingabegeräte oder Ausgabegeräte bezeichnet werden, sowohl Eingaben liefern als auch Ausgaben der Kommunikation mit dem Computer empfangen können. Zum Beispiel kann der Computer in ein Gehäuse (wie ein Tablet oder ein am Kopf getragenes Display) integriert sein, das einen Touchscreen enthält oder das in der Lage ist, Bewegungsgesteneingaben zu erfassen, die sowohl als Eingabe- als auch als Anzeigegerät dienen. Ferner ist zu beachten, dass einige Eingabegeräte eine Vielzahl verschiedener Arten von Eingabegeräten (z. B. Touchscreen, Touchpad und Tastatur) umfassen können.

Zusätzlich zu einem Kommunikationscontroller können weitere Geräte mit dem Computer verbunden sein, wie z.B. ein beliebiges lokales, Weitverkehrsnetz, Fernnetz, privates und/oder öffentliches Datenverarbeitungssystem oder eine Kombination von Netzen, wie sie dem Fachmann bekannt sind, einschließlich des Internets.

Darüber hinaus sollte man sich bewusst sein, dass Datenverarbeitungssysteme virtuelle Maschinen in einer virtuellen Maschinenarchitektur oder im Cloud-Raum enthalten können. Beispielsweise können der Computer und die zugehörigen Komponenten der Kombination eines oder mehrerer virtueller Maschinenprozessoren einer virtuellen Maschine entsprechen, die in einem oder mehreren physischen Prozessoren eines physischen Datenverarbeitungssystems arbeitet.

Es sollte auch beachtet werden, dass der hier beschriebene Computer einem entfernten Prozessor entsprechen kann, der sich in einem Datenverarbeitungssystem wie einem Server befindet, der von den hier beschriebenen Anzeige- und Eingabegeräten entfernt ist. In einem solchen Beispiel können das beschriebene Anzeigegerät und das Eingabegerät in einem Client-Datenverarbeitungssystem enthalten sein (das seinen eigenen Prozessor haben kann), das mit dem Server (der den entfernten Prozessor enthält) über ein verdrahtetes oder drahtloses Netzwerk (das das Internet umfassen kann) kommuniziert. In einigen Ausführungsformen kann ein solches Client-Datenverarbeitungssystem beispielsweise eine Remote-Desktop-Anwendung ausführen oder einem Portalgerät entsprechen, das ein Remote-Desktop-Protokoll mit dem Server ausführt, um Eingaben von einem Eingabegerät an den Server zu senden und visuelle Informationen vom Server zur Anzeige über ein Anzeigegerät zu empfangen. Beispiele für solche Remote-Desktop-Protokolle sind das PCoIP von Teradici, das RDP von Microsoft und das RFB-Protokoll. In einem anderen Beispiel kann ein solches Client-Datenverarbeitungssystem einen Webbrowser oder eine Thin-Client-Anwendung ausführen. Die Eingaben des Benutzers können vom Webbrowser oder der Thin-Client-Anwendung übertragen werden, um auf dem Server ausgewertet zu werden, vom Server gerendert zu werden und ein Bild (oder eine Reihe von Bildern) an das Client-Datenverarbeitungssystem zurückzusenden, damit es vom Webbrowser oder der Thin-Client-Anwendung angezeigt wird. In einigen Beispielen kann der hier beschriebene Remote-Prozessor auch einer Kombination aus einem virtuellen Prozessor einer virtuellen Maschine entsprechen, die in einem physischen Prozessor des Servers ausgeführt wird.

Wie hierin verwendet, sollen die Begriffe "Komponente" und "System" Hardware, Software oder eine Kombination aus Hardware und Software umfassen. So kann ein System oder eine Komponente zum Beispiel ein Prozess, ein auf einem Prozessor ausgeführter Prozess oder ein Prozessor sein.

Außerdem kann eine Komponente oder ein System auf einem einzigen Gerät lokalisiert oder über mehrere Geräte verteilt sein.

Obwohl eine beispielhafte Ausführungsform der vorliegenden Offenbarung detailliert beschrieben wurde, wird der Fachmann verstehen, dass verschiedene Änderungen, Ersetzungen, Variationen und Verbesserungen, die hier offenbart werden, vorgenommen werden können, ohne vom Geist und Umfang der Offenbarung in ihrer weitesten Form abzuweichen.

Keine der Beschreibungen in der vorliegenden Anmeldung sollte so verstanden werden, dass ein bestimmtes Element, ein Schritt, eine Handlung oder eine Funktion ein wesentliches Element ist, das in den Anspruchsumfang aufgenommen werden muss: Der Umfang des patentierten Gegenstands wird nur durch die zugelassenen Ansprüche definiert. Darüber hinaus ist keiner dieser Ansprüche so zu verstehen, dass er sich auf eine Mittel-plus-Funktion-Anspruchskonstruktion beruft, es sei denn, die genauen Worte "Mittel für" werden von einem Partizip gefolgt.

## Patentansprüche

1. Computerimplementiertes Verfahren zum Erkennen eines Objektes in einem Innenraum eines öffentlichen Verkehrsmittels, das nicht Teil der Einrichtung des Innenraums ist, wobei von einer Kamera ein Bild des Innenraumes aufgenommen wird, wobei das aufgenommene Bild mit einem Referenzbild des Innenraumes verglichen wird, wobei das Referenzbild den Innenraum des öffentlichen Verkehrsmittels ohne ein Objekt darstellt, das nicht Teil der Einrichtung des Innenraums ist,
wobei bei dem Vergleich Pixel des aufgenommenen Bildes und Pixel des Referenzbildes verglichen werden, wobei bei dem Vergleich der Pixel des aufgenommenen Bildes und des Referenzbildes ein Helligkeitsunterschied und/oder ein Farbunterschied zwischen den Pixeln ermittelt wird, wobei ein Pixel des aufgenommenen Bildes als abweichendes Pixel erkannt wird, wenn der Helligkeitsunterschied und/oder der Farbunterschied gegenüber dem Pixel des Referenzbildes einen vorgegebenen Schwellwert überschreitet, wobei um das wenigstens eine abweichende Pixel ein vorgegebener Prüfbereich im aufgenommenen Bild festgelegt wird, wobei der Prüfbereich, ob sich ein Objekt in dem Prüfbereich befindet, das nicht Teil der Einrichtung des Innenraums ist, und wobei ein Signal ausgegeben wird, wenn sich ein Objekt, das nicht Teil der Einrichtung des Innenraums ist, im Prüfbereich des aufgenommenen Bildes befindet.

2. Verfahren nach Anspruch 1, wobei mithilfe eines trainierten Klassifikators der Prüfbereich des aufgenommenen Bildes dahingehend überprüft wird, ob sich ein Objekt, das nicht Teil der Einrichtung des Innenraums ist, in dem Prüfbereich befindet.

3. Verfahren nach einem der vorhergehenden Ansprüche, wobei das Referenzbild von einem trainierten neuronalen Netz bereitgestellt wird, wobei das trainierte neuronale Netz insbesondere als Autoencoder ausgebildet ist, der darauf trainiert ist, von einem aufgenommenen Bild ein rekonstruiertes Bild zu erstellen, wobei das rekonstruierte Bild das Referenzbild darstellt.

4. Verfahren nach einem der vorhergehenden Ansprüche, wobei der Prüfbereich mit einer vorgegebenen Vergleichsfläche verglichen wird, wobei der Prüfbereich nur dann auf ein Objekt überprüft wird, wenn der Prüfbereich größer als die Vergleichsfläche ist, wobei die Vergleichsfläche insbesondere einer von der Kamera aufgenommenen Mindestfläche eines Menschen entspricht.

5. Verfahren nach einem der vorhergehenden Ansprüche, wobei das aufgenommene Bild vor der weiteren Verarbeitung vorbearbeitet wird, wobei das Bild in Grauwerte umgewandelt wird und/oder wobei Helligkeitsunterschiede und/oder Farbunterschiede zwischen benachbarten Pixeln des aufgenommenen Bildes mithilfe eines Filterverfahren geglättet werden.

6. Verfahren nach einem der Ansprüche 2 bis 5, wobei der Klassifikator eine Support Vektor Maschine oder ein trainiertes neuronales Netz ist.

7. Verfahren nach einem der vorhergehenden Ansprüche, wobei für einen identischen Bildbereich von überlappenden aufgenommenen Bildern von zwei Kameras erst dann ein Objekt erkannt wird, das nicht Teil der Einrichtung des Innenraums ist, wenn das Objekt in jeden der zwei identischen Bildbereiche der zwei Kameras erkannt wurde.

8. Verfahren nach Anspruch 7, wobei die identischen überlappenden Bildbereiche der zwei aufgenommenen Bilder der zwei Kameras mit verschiedenen Verfahren dahingehend überprüft werden, ob ein Objekt, das nicht Teil der Einrichtung des Innenraums ist, vorhanden ist.

9. Verfahren nach einem der vorhergehenden Ansprüche, wobei das Signal eine Kennung, insbesondere eine ID Nummer, der Kamera beinhaltet, wobei die Kennung die Kamera und insbesondere einen bestimmten Bereich des öffentlichen Verkehrsmittels identifiziert.

10. Verfahren nach einem der Ansprüche 3 bis 9, wobei das neuronale Netz mit Bildern von Innenräumen des öffentlichen Verkehrsmittels ohne Objekte trainiert wurde, um ein Referenzbild zu erzeugen.

11. Verfahren nach einem der vorhergehenden Ansprüche, wobei anhand einer vorgegebenen Anzahl der abweichenden Pixel und/oder anhand von Positionen der abweichenden Pixel ein Objekt, das nicht Teil der Einrichtung des Innenraums des öffentlichen Verkehrsmittels ist, erkannt wird.

12. Verfahren nach einem der vorhergehenden Ansprüche, wobei das ausgegebene Signal dazu verwendet wird, um über eine Ausgabe einer Anweisung insbesondere im Innenraum des öffentlichen Verkehrsmittels und/oder eine Bedienperson darauf hinzuweisen, dass, und insbesondere wo, sich im öffentlichen Verkehrsmittel ein Objekt befindet.

13. Computer, der ausgebildet ist, eines der vorhergehenden Verfahren auszuführen.

14. Computerprogramm, das Befehle aufweist, die bei einer Ausführung auf einem Computer ein Verfahren gemäß einem der Ansprüche 1 bis 12 ausführen.

15. Maschinenlesbares Speichermedium, auf dem das Computerprogramm nach Anspruch 14 gespeichert ist.
